# EUROPÄISCHE PATENTSCHRIFT

(11) **EP 1 179 031 B1**
(45) Veröffentlichungstag und Bekanntmachung des Hinweises auf die Patenterteilung: **17.11.2004**
(21) Anmeldenummer: 00931106.9
(22) Anmeldetag: 03.05.2000
(51) Int. Cl.: C08J 9/35, C08J 9/16, C08J 9/18

(54) **OFFENZELLIGE PARTIKELSCHAUMSTOFFE**
OPEN-CELL PARTICULATE FOAMS
MOUSSES PARTICULAIRES A ALVEOLES OUVERTES

(30) Priorität: 10.05.1999 DE 19921386
(43) Veröffentlichungstag der Anmeldung: 13.02.2002
(73) Patentinhaber: BASF AKTIENGESELLSCHAFT, 67056 Ludwigshafen (DE)
(72) Erfinder: GLÜCK, Guiscard, D-55129 Mainz (DE); DIETZEN, Franz-Josef, D-67071 Ludwigshafen (DE); HAHN, Klaus, D-67281 Kirchheim (DE); EHRMANN, Gerd, D-67146 Deidesheim (DE)
(86) Internationale Anmeldenummer: PCT/EP2000/003966
(87) Internationale Veröffentlichungsnummer: WO 2000/068306

(56) Entgegenhaltungen:
- EP-A- 0 055 460
- EP-A- 0 191 327
- EP-A- 0 642 907
- WO-A-97/22656
- WO-A-98/58991
- WO-A-99/47592
- GB-A- 2 322 100
- US-A- 4 452 751

## Beschreibung

Die Erfindung betrifft offenzellige Partikelschaumstoff auf Basis von Styrolpolymerisaten.

Offenzellige Schaumstoffe bieten den Vorteil, daß sie evakuiert werden können. Die dabei erhaltenen evakuierten Vakuumformteile weisen eine erheblich niedrigere Wärmeleitfähigkeit und damit ein wesentlich besseres Isoliervermögen auf als herkömmliche Schaumstoffe.

Offenzellige extrudierte Schaumstoff-Folien und -Platten auf Basis von Styrolpolymerisation sind bekannt, z.B. aus EP-A 642,907, WO 9600258 und WO 96/34038. Sie werden hergestellt durch Extrusion einer Polystyrolschmelze, die ein flüchtiges Treibmittel sowie ein Nukleierungsmittel zugemischt enthält, bei Temperaturen im Bereich von 110 bis 140°C. Nach WO 98/58991 sollen dabei dem Polystyrol 0,1 bis 7 Gew.-% eines Ethylen/Vinylacetat-Copoylmeren zugemischt werden.

Schaumstoff-Folien und -Platten haben jedoch eine einfache Gestalt; ihre Dicke und Breite ist durch die Dimensionen der Extrusionsapparatur vorgegeben.

Polystyrolschaumstoff-Formkörper beliebiger Dimensionen und Gestalt können bekanntlich durch Verschäumen von treibmittelhaltigen Polystyrolgranulat und Versintern der dabei erhaltenen Schaumstoffpartikel hergestellt werden.

Der Erfindung lag nun die Aufgabe zugrunde, offenzellige Partikelschaumstoffe auf Basis von Styrolpolymerisaten bereitzustellen.

Diese Aufgabe wird erfindungsgemäß dann gelöst, wenn die Thermoplastmatrix A. 99 - 50 Gew.-% eines Styrolpolymerisats und B. 1 - 50 Gew.-% eines mit A wenig verträglichen Polymeren enthält, wobei dei im Hauptanspruch genanten Random-Interpolymere ausgenommen wird.

Styrolpolymerisate A im Sinne dieser Erfindung sind Polystyrol und Mischpolymerisate des Styrols, die mindestens 80 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol oder auch geringe Mengen an Verbindungen, die zwei polymerisierbare Doppelverbindungen enthalten wie Butadien, Divinylbenzol oder Butandioldiacrylat. Bevorzugt ist Polystyrol.

Die Polymermischung A + B enthält 1 bis 50, vorzugsweise 2 bis 35 Gew.-% eines mit A wenig verträglichen Polymeren B. Im Fall von Polypropylen als Polymer B ist die bevorzugte Menge 3 bis 10 Gew.-%, bei Polymethylmethacrylat 10 bis 25 Gew.-%.

Die Unverträglichkeit von B mit A wird folgendermaßen bestimmt:

Die Glasübergangstemperatur der Polymermischung wird nach der DSC-Methode gemessen. Wenn in der DSC-Kurve die Glaspunkte der Einzelkomponenten einzeln erkennbar sind, und wenn diese Glaspunkte nicht gegenüber den Glaspunkten der reinen Einzelkomponenten deutlich verschoben sind, liegt Unverträglichkeit vor. Im Zweifelsfall kann die Unverträglichkeit von B mit A auch mittels Elektronenmikroskopie ermittelt werden. Hierbei zeigen sich im Falle von Unverträglichkeit bei geeigneter Kontrastierung zwei diskrete Phasen, wobei die Phase A als kohärente Phase vorliegt.

Geeignete Polymere B sind Polyethylen, Polypropylen, Ethylen/Vinylacetat-Copolymer, Polyurethan, Polyamide, Polycarbonat, Polyethersulfone, Polyoxymethylen, Polyvinylchlorid und Polyimid. Bevorzugt sind Polymethylacrylat und Polypropylen.

Ein weiterer Aspekt der vorliegenden Erfindung sind offenzellige Partikelschaumstoffe mit erhöhter Wärmeformbeständigkeit. Diese werden erhalten, wenn das Polymergemisch A + B noch 5 bis 50, vorzugsweise 10 bis 30 Gew.-%, bezogen auf A + B, eines Thermoplasten C mit einer Glastemperatur von höher als 140°C, vorzugsweise höher als 180°C, zugesetzt werden. Geeignete Thermoplasten C sind zum Beispiel Styrol/Maleinsäureanhydrid-Copolymere und Polyphenylensulfid. Bevorzugt ist Polyphenylenether. Durch den Zusatz des Thermoplasten C wird die Glastemperatur der Thermoplastmatrix A + C auf Temperaturen oberhalb von 105°C angehoben. Dadurch wird erreicht, daß z.B. beim Einschäumen von Vakuum-Panels in Polyurethan der Schaumstoff nicht erweicht.

Ausgangsmaterial für die Herstellung der erfindungsgemäßen offenzelligen Partikelschaumstoffe ist treibmittelhaltiges Granulat. Zu dessen Herstellung werden zunächst die Polymeren A, B und ggf. C mit üblichen Zusatzstoffen in der Schmelze vermischt.

Als übliche Zusatz- und/oder Hilfsstoffe können der Thermoplastmatrix Stabilisatoren, Farbstoffe, Füllstoffe, Flammschutzmittel und/oder Keimbildner in üblichen Mengen zugesetzt werden. Bevorzugt sind 1 bis 10 Gew.-%, bezogen auf A + B + C, eines Infrarotabsorbers, z.B. Aluminium- oder Titandioxidpulver oder von Kohlenstoffpartikeln, insbesondere von Graphitpulver, wodurch die Offenzelligkeit noch weiter erhöht wird.

Das nach dem Vermischen erhaltene Granulat wird dann nach üblichen Verfahren mit flüchtigen Treibmitteln imprägniert, vorzugsweise in wässriger Suspension bei Temperaturen zwischen 100 und 150°C und Drücken von 3 bis 15 bar. Geeignete Treibmittel sind gesättigte aliphatische C₄-C₇-Kohlenwasserstoffe, insbesondere Pentan.

Grundsätzlich kann man auch treibmittelhaltiges Granulat A auf dem Extruder mit Granulat B und ggf. C vermischen, oder man kann beim Vermischen von A, B und ggf. C Treibmittel zuführen. Bei diesen Verfahren ist es dann zweckmäßig, den aus dem Extruder ausgepreßten Schmelzestrang unter Druck durch Unterwasserabschlag zu granulieren.

Das treibmittelhaltige Granulat wird mit Wasserdampf bei Temperaturen zwischen 60 und 160°C vorgeschäumt, wobei - bedingt durch das zugesetzte mit Polystyrol wenig verträgliche Polymere B - die Zellmembranen platzen und offenzellige Schaumpartikel entstehen. Durch mehrmaliges Schäumen kann die Dichte der Schaumpartikel gezielt eingestellt werden. Schließlich werden die Schaumpartikel mit Wasserdampf oder Heißluft in nicht gasdichtschließenden Formen zu Schaumstoff-Formkörper versintert. Diese weisen erfindungsgemäße eine Offenzelligkeit von mehr als 80 %, vorzugsweise von mehr als 90 %, und insbesondere von mindestens 95 %, auf. Ist die Offenzelligkeit zu niedrig, dann läßt sich der Formkörper nicht ausreichend stark evakuieren; sie enthält dann noch zu viel Gas in den Zellen, so daß die Wärmeleitfähigkeit nicht stark genug erniedrigt ist.

Die erfindungsgemäßen offenzelligen Schaumstoffe können zu Vakuum-Formkörpern evakuiert werden. Diese finden Anwendung als Vakuum-Panels in Kälteisolierungen, z.B. in Kühlschränken, Tiefkühlschränken und bei Kühltransporteinrichtungen.

### Beispiel 1 (erfindungsgemäß)

Mittels eines Zweischneckenextruders wird ein Blend aus 95 % Polystyrol (VPT, BASF AG) und 5 % Polypropylen (3200 MC, BASF AG) hergestellt. 20 kg des durch Kaltabschlag erhaltenen Granulats (größter Durchmesser circa 1,5 mm) werden in einen druckfesten Rührkessel unter Vorlage von 20 kg vollentsalztem Wasser, sowie 35 g Natriumpyrophosphat und 70 g Magnesiumsulfat (Bittersalz) und 1,8° g Emulgator K 30 als Suspensionsstabilisator eingebracht. Der Kesselinhalt wird auf 125°C erhitzt, wobei nach Erreichen von 110°C 1600 g Pentan dosiert wird. Nachdem der Kessel für 4 h bei 125°C gehalten wurde, wird der Kessel auf Raumtemperatur abgekühlt. Man erhält ein kompaktes perlförmiges Granulat, das mittels Wasserdampf in einem diskontinuierlichen Druckvorschäumer, wie er für die EPS-Verarbeitung bekannt ist, bei 0,3 bar Überdruck aufgeschäumt wurde. Die so erhaltenen Schaumperlen besaßen eine Schüttdichte von 15 g/l. Daraus wurde ein Schaumstoffformteil gleicher Dichte durch Versintern der einzelnen Perlen erhalten. Das so erhaltene Schaumstoffformteil besaß eine Offenzelligkeit von 95 %. Der Offenzelligkeitsgrad wurde nach ASTM D 2856-87, Verfahren C, mit einem Accupyc 1330-Gerät bestimmt.

### Beispiel 2 (Vergleich)

Analog Beispiel 1, jedoch ohne Polypropylen. Das so erhaltene Schaumstoffformteil besaß eine Offenzelligkeit von 0 %.

### Beispiel 3 (erfindungsgemäß)

Analog Beispiel 1, jedoch mit 80 % Polystyrol und 20 % Polymethylmethacrylat (Lucryl G77E). Das so erhaltene Schaumstoffformteil besaß eine Offenzelligkeit von 95 %.

## Patentansprüche

1. Partikelschaumstoffe mit einer Offenzelligkeit von mehr als 80 % auf Basis von Styrolpolymerisaten, **dadurch gekennzeichnet, daß** die Thermoplastmatrix
| | | |
|---|---|---|
| A. | 99 bis 50 Gew.-% | eines Styrolpolymerisats und |
| B. | 1 bis 50 Gew.-% | eines mit dem Styrolpolymerisat wenig verträglichen Polymeren |
enthält, wobei Random-Interpolymere aus
(1) 0,5 bis 65 Mol % eines vinyl- oder vinyliden-aromatischen Monomeren oder eines sterisch gehinderten aliphatischen oder cycloaliphatischen Vinyl- oder Vinyliden - Monomeren und
(2) 35 bis 99,5 Mol % Ethylen oder eines C₃-C₂₀-α-Olefins
ausgenommen sind.

2. Partikelschaumstoffe nach Anspruch 1, **dadurch gekennzeichnet, daß** die Thermoplastmatrix zusätzlich 5 bis 50 Gew.-%, bezogen auf A + B, eines mit A verträglichen Thermoplasten C mit einer Glastemperatur von höher als 140°C enthält.

3. Partikelschaumstoffe nach Anspruch 1, **dadurch gekennzeichnet, daß** der Thermoplast A Polystyrol ist.

4. Partikelschaumstoffe nach Anspruch 1, **dadurch gekennzeichnet, daß** das Polymere B Polyethylen, Polypropylen, ein Ethylen/Vinylacetat-Copolymer, ein Polyurethan oder Polymethylmethacrylat ist.

5. Partikelschaumstoffe nach Anspruch 2, **dadurch gekennzeichnet, daß** der Thermoplast C Polyphenylenether ist.

6. Partikelschaumstoffe nach Anspruch 1, **dadurch gekennzeichnet, daß** sie 1 bis 10 Gew.-%, bezogen auf A + B + C, athermane Partikel, vorzugsweise Graphit, enthalten.

7. Verfahren zur Herstellung der Partikelschaumstoffe nach Anspruch 1 durch Imprägnieren von Granulat, welches die Polymeren A, B und ggf. C enthält, mit 3 bis 15 Gew.-%, bezogen auf A + B + C, eines flüchtigen Treibmittels in wässriger Suspension unter Druck bei erhöhter Temperatur, Expandieren des treibmittelhaltigen Granulats zu offenzelligen Schaumstoffpartikeln und Verschweißen dieser Schaumstoffpartikel.

8. Verwendung der Partikelschaumstoffe nach Anspruch 1 zur Herstellung von offenzelligen Schaumstoff-Formteilen.

## Claims

1. A moldable foam based on styrene polymers and with an open-cell content of more than 80%, wherein the thermoplastic matrix comprises
| | | |
|---|---|---|
| A. | from 99 to 50% | by weight of a styrene polymer, and |
| B. | from 1 to 50% | by weight of a polymer of low compatibility with the styrene polymer. |
but excluding random interpolymers of
(1) from 0.5 to 65 mol% of a vinyl- or vinylidine-aromatic monomer or of a sterically hindered aliphatic or cycloaliphatic vinyl or vinylidene monomer and
(2) from 35 to 99.5 mol% of ethylene or of a C₃-C₂₀ α-olefin.

2. A moldable foam as claimed in claim 1, wherein the thermoplastic matrix also comprises from 5 to 50% by weight, based on A + B, of a thermoplastic C which is compatible with A and has a glass transition temperature above 140°C.

3. A moldable foam as claimed in claim 1, wherein the thermoplastic A is polystyrene.

4. A moldable foam as claimed in claim 1, wherein the polymer B is polyethylene, polypropylene, an ethylene-vinyl acetate copolymer, a polyurethane or polymethyl methacrylate.

5. A moldable foam as claimed in claim 2, wherein the thermoplastic C is polyphenylene ether.

6. A moldable foam as claimed in claim 1, which comprises from 1 to 10% by weight, based on A + B + C, of athermanous particles, preferably graphite.

7. A process for producing the moldable foams as claimed in claim 1, by impregnation of pellets which comprise the polymers A, B and, if desired, C with from 3 to 15% by weight, based on A + B + C, of a volatile blowing agent in aqueous suspension under superatmospheric pressure and elevated temperature, and expansion of the pellets comprising blowing agents, to give open-cell moldable foam, and fusion of this moldable foam.

8. The use of the moldable foams as claimed in claim 1 for producing open-cell foam moldings.

## Revendications

1. Mousses particulaires ayant une proportion d'alvéoles ouvertes de plus de 80%, à base de polymères de styrène, **caractérisée en ce que** la matrice thermoplastique contient
| | | |
|---|---|---|
| A. | de 99 à 0% en poids | d'un polymère de styrène et |
| B. | de 1 à 50% en poids | d'un polymère peu compatible avec le polymère de styrène, |
à l'exception d'interpolymères statistiques constitués de
(1) 0,5 à 65% molaires d'un monomère de vinyle ou de vinylidène aromatique ou d'un monomère de vinyle ou de vinylidène aliphatique ou cycloaliphatique à empêchement stérique et
(2) 35 à 99,5% molaires d'éthylène ou d'une α-oléfine en C₃ à C₂₀.

2. Mousses particulaires selon la revendication 1, **caractérisées en ce que** la matrice thermoplastique contient en outre de 5 à 50% en poids, par rapport à A + B, d'un thermoplastique C compatible avec A et présentant une température de transition vitreuse supérieure à 140°C.

3. Mousses particulaires selon la revendication 1, **caractérisées en ce que** le thermoplastique A est du polystyrène.

4. Mousses particulaires selon la revendication 1, **caractérisées en ce que** le polymère B est du polyéthylène, du polypropylène, un copolymère d'éthylène / acétate de vinyle, un polyuréthanne ou un poly(méthacrylate de méthyle).

5. Mousses particulaires selon la revendication 1, **caractérisées en ce que** le thermoplastique C est du poly(éther de phénylène).

6. Mousses particulaires selon la revendication 1, **caractérisées en ce qu'**elle contiennent de 1 à 10% en poids, par rapport à A + B + C, de particules athermanes, de préférence du graphite.

7. Procédé de préparation des mousses particulaires selon la revendication 1 par imprégnation d'un produit granulé, qui contient les polymères A, B et éventuellement C, avec de 3 à 15% en poids, par rapport à A + B + C, d'un agent porogène volatil en suspension aqueuse sous pression à température élevée, expansion du granulé contenant l'agent porogène pour former des particules de mousse à alvéoles ouvertes et fusionnement de ces particules de mousse.

8. Utilisation des mousses particulaires selon la revendication 1 pour la production de pièces moulées en mousse à alvéoles ouvertes.
